Europäisches Patentamt

European Patent Office

Office européen des brevets

(19)

(11) Numéro de publication : **0 059 661**
**B1**

(12)

# FASCICULE DE BREVET EUROPÉEN

(45) Date de publication du fascicule du brevet :
30.01.85

(21) Numéro de dépôt : 82400306.5

(22) Date de dépôt : 22.02.82

(51) Int. Cl.⁴ : **G 21 C 15/06, G 21 C 3/32**

(54) **Dispositif de réglage du débit d'un fluide.**

(30) Priorité : 26.02.81 FR 8103835

(43) Date de publication de la demande :
08.09.82 Bulletin 82/36

(45) Mention de la délivrance du brevet :
30.01.85 Bulletin 85/05

(84) Etats contractants désignés :
BE DE FR GB IT NL

(56) Documents cités :
FR-A- 2 065 744
FR-A- 2 296 918
FR-A- 2 316 703
FR-A- 2 393 402
GB-A- 1 418 495
GB-A- 2 051 459

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Rion, Jacky
Les Nids de Provence
F-84120 Pertuis (FR)**

(74) Mandataire : **Mongrédien, André et al
c/o BREVATOME 25, rue de Ponthieu
F-75008 Paris (FR)**

Jouve, 18, rue St-Denis, 75001 Paris, France

## Description

La présente invention a pour objet un dispositif de réglage du débit d'un fluide comprenant une série de grilles disposées perpendiculairement à l'écoulement du fluide, formé d'un empilement de grilles contiguës, dont chacune est constituée de mailles identiques formant un réseau plan.

D'une façon générale, le problème que doit permettre de résoudre le dispositif est de provoquer une perte de charge donnée pour un débit nominal donné et une pression avale déterminée, sans produire de cavitation.

Ce dispositif s'applique en particulier au réglage du débit du fluide de refroidissement circulant dans le pied d'un assemblage de réacteur nucléaire refroidi par un métal liquide.

On sait que le cœur d'un réacteur nucléaire refroidi par un métal liquide, constitué le plus souvent par du sodium, est formé par le groupement côte à côte d'assemblages disposés verticalement, comprenant chacun un boîtier allongé ouvert à son extrémité supérieure, et muni à son extrémité inférieure d'un pied de positionnement.

Ces assemblages sont habituellement supportés par un sommier rigide qui est alimenté, au moyen de pompes de circulation, en sodium liquide sortant des échangeurs de chaleur.

Pour assurer une fixation mécanique convenable du pied de positionnement de l'assemblage, ce dernier vient s'emboîter dans ou sur une pièce porteuse intégrée au sommier de support du cœur ; cette pièce porteuse assurant également l'alimentation en sodium liquide du pied de l'assemblage.

Les débits du sodium liquide de refroidissement dans ces assemblages doivent être convenablement ajustés selon leur position.

On connaît divers dispositifs implantés dans les pièces porteuses ou les pieds d'assemblages permettant de régler le débit d'un fluide de refroidissement.

Ainsi, dans les réacteurs nucléaires à neutrons rapides conçus ou réalisés à ce jour, on utilise habituellement, dans le même cadre d'applications, des dispositifs constitués d'empilements de diaphragmes à trou central, à orifices annulaires ou à perforations multiples, du type de ceux qui sont décrits dans les brevets FR-A-2 316 703 et FR-A-2 444 320. Ces dispositifs simples à réaliser conduisent à des encombrements importants pour des performances réduites vis-à-vis de la cavitation.

Un autre dispositif est décrit dans le document FR-A-2 065 744. Ce dispositif comporte une série de barrages minces espacés dans le sens d'écoulement, chaque barrage étant constitué d'une toile métallique coopérant avec des dispositifs réglables formant masque qui sont capables de modifier la surface effective présentée à l'écoulement du liquide.

On connaît également (document FR-A-2 296 918) un dispositif de réglage du débit d'un fluide dans un assemblage combustible de réacteur nucléaire. Il comprend une série de plaques disposées perpendiculairement à l'axe du corps de l'assemblage. Deux catégories de plaques différentes sont disposées en alternance : des toiles métalliques d'une part, et des plaques percées d'orifices circulaires répartis régulièrement, d'autre part. Ces dernières ont pour but d'espacer les toiles métalliques et de créer un espace en aval dans lequel se produit une chute de pression.

Cependant pour de fortes dissipations d'énergie hydraulique, la résistance mécanique des toiles métalliques n'offre pas toute garantie. En outre, une telle conception ne conduit pas à la compacité radiale optimale.

La présente invention a pour objet un dispositif de réglage du débit du fluide de refroidissement tel que défini dans la revendication 1 qui remédie à ces inconvénients. Il permet de réaliser un dispositif plus compact que les précédents, ce qui permet de réduire la hauteur du pied de l'assemblage tout en assurant de bonnes performances relativement à la cavitation.

Un autre avantage, particulièrement intéressant du dispositif du réglage de débit de l'invention est constitué par le fait que le montage des grilles est rendu plus aisé parce qu'elles sont toutes identiques.

Enfin, les nombreux points d'appui entre les différentes grilles confèrent à la structure ainsi constituée, une grande rigidité mécanique et une bonne résistance aux sollicitations vibratoires dues à l'écoulement, tout en conservant une grande porosité (supérieure à 0,8).

Plus précisément, ce dispositif est du genre de ceux qui comprennent une série de grilles perpendiculaires à l'écoulement du fluide.

Il se caractérise en ce qu'il est constitué de grilles identiques superposées dont les motifs sont agencés selon un réseau triangulaire équilatéral.

On peut distinguer deux motifs complémentaires centrés sur deux triangles équilatéraux adjacents, l'un étant un orifice de forme variable et l'autre un croisillon à trois branches. L'association de ces deux motifs forme la maille de la grille.

Par rotation de 60° ou retournement, on superpose à l'orifice d'une grille le croisillon de la grille suivante. Cette disposition oblige le fluide à suivre un cheminement sinueux à travers l'empilement des grilles.

Le réglage de la perte de charge désirée est obtenu en jouant sur le nombre de grilles empilées pour une maille donnée. Il est possible, en outre, d'ajuster plus précisément la valeur de cette perte de charge en superposant les orifices pour une fraction des grilles de l'empilement.

Enfin, l'ensemble de l'empilement des grilles peut être solidarisé, par exemple, par des broches traversant un certain nombre des points de contact situés aux sommets des triangles équilatéraux des mailles.

L'invention sera mieux comprise à la lecture de la description qui suit de trois exemples de réalisation, donnés à titre d'exemples non limitatifs. La description se réfère aux figures annexées sur lesquelles on a représenté :

sur la figure 1, une vue en coupe verticale d'un assemblage combustible comportant un dispositif de réglage réalisé selon l'invention,

sur les figures 2 à 4, trois modes de réalisation différents des plaques du dispositif de la figure 1,

sur la figure 5, une vue en coupe verticale d'une variante d'un assemblage combustible comportant un dispositif réalisé selon l'invention.

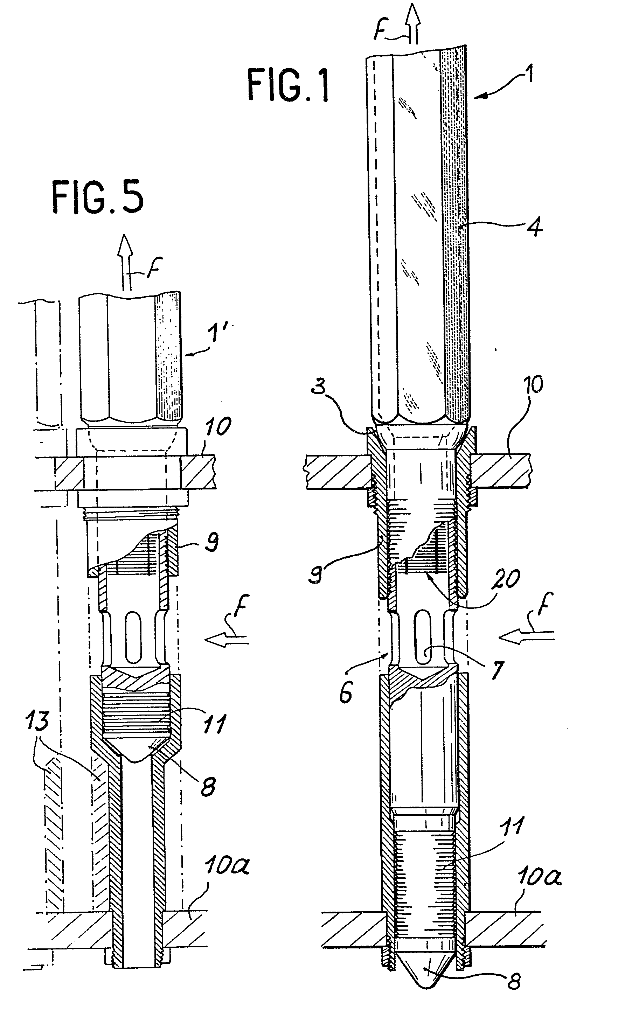

Sur la figure 1, on a représenté une vue en coupe verticale d'un assemblage combustible 1 comportant un dispositif régulateur du débit. Cet assemblage est monté dans le cœur d'un réacteur nucléaire à neutrons rapides et à refroidissement par un métal liquide. Il comporte à son extrémité inférieure un pied de positionnement formé par un corps cylindrique creux 2 réuni par une pièce à portée sphérique 3 à un boîtier ouvert 4 disposé dans le prolongement du pied. Dans sa partie médiane, le corps 2 comporte une zone 6 dans laquelle sont ménagées des ouvertures oblongues 7 régulièrement réparties autour de son axe et permettant au métal liquide de refroidissement de circuler dans le pied en pénétrant dans celui-ci par des ouvertures avant de s'écouler de bas en haut, d'abord dans le corps 2 puis dans le boîtier 4, avant de sortir de ce dernier par sa partie supérieure ouverte. A son extrémité inférieure, le corps 2 est obturé par un bouchon 8 fixé sur le pied. Le corps 2 est maintenu en position verticale par engagement dans une chandelle creuse 9 appartenant à un sommier 10 de support du cœur du réacteur. Le métal liquide de refroidissement, refoulé sous pression dans le sommier 10, pénètre dans l'assemblage 1 et s'écoule de bas en haut dans celui-ci.

Conformément à l'invention, le dispositif est constitué par une série de grilles 20 identiques entre elles, de préférence en acier inoxydable, disposées perpendiculairement à l'écoulement du fluide.

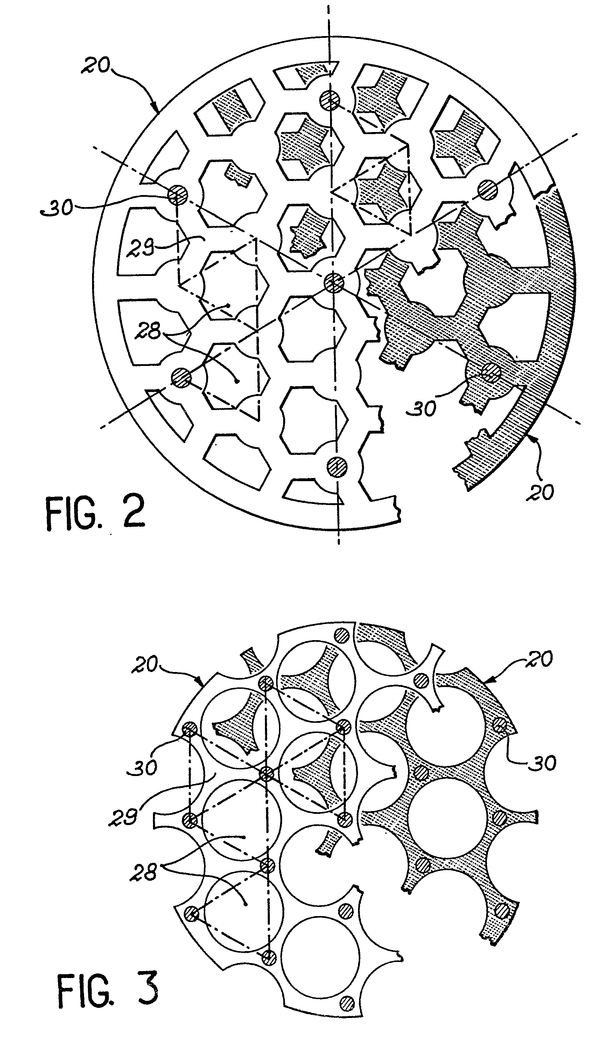

Les figures 2 à 4 représentent trois modes de réalisation différents des grilles 20. Le dispositif se compose d'une série de grilles montées dans le corps 2 du pied de l'assemblage 1. Ces grilles, toutes identiques pour un mode de réalisation donné, sont constituées par un réseau plan à mailles régulières, dont chacune est formée par deux triangles équilatéraux adjacents, l'un correspondant à un orifice 28 et l'autre contenant un croisillon 29 à trois branches. Par rotation de 60 degrés d'une grille par rapport à la grille contiguë, on superpose à l'orifice 28 d'une grille le croisillon 29 de la grille contiguë. Cette disposition entraîne un recouvrement partiel des orifices, obligeant le fluide à suivre un cheminement sinueux à travers l'empilement des grilles 20.

Dans le cas des exemples de réalisation représentés sur les figures 2 à 4, on distingue un réseau plan à mailles identiques, dont chacune est constituée de deux triangles équilatéraux adjacents 28 et 29. Au montage, par rotation de 60 degrés d'une grille à la suivante les croisillons des triangles équilatéraux 29 de l'une des grilles viennent se superposer avec un recouvrement partiel aux orifices des triangles équilatéraux 28.

Après empilement de toutes les grilles, celles-ci sont solidarisées dans le sens axial par des tirants traversant un certain nombre des sommets 30 des triangles équilatéraux.

La section de passage offerte au fluide est définie par le débit nominal de ce fluide. La longueur du dispositif, c'est-à-dire le nombre de plaques empilées, est défini par la chute de pression à réaliser. Le choix judicieux de certains paramètres permet de minimiser le volume du dispositif.

On a représenté sur la figure 3 une variante du dispositif de la figure 2. Dans ce mode de réalisation, les ouvertures pratiquées dans les grilles 20 sont circulaires. Comme pour le mode de réalisation précédent, l'empilement des grilles est réalisé après rotation de 60 degrés d'une grille par rapport à la précédente. Le réglage du taux d'ouverture est fait en jouant sur le diamètre des ouvertures. Après superposition des plaques, comme on peut le voir sur la figure 3, le passage laissé au fluide présente la forme de ménisques ou de lentilles.

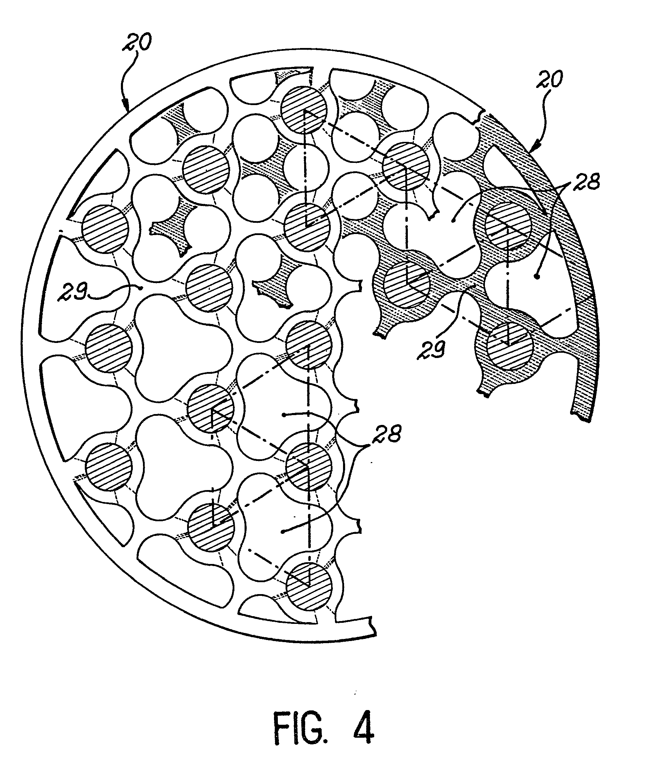

Le dessin de grille représenté sur la figure 4 représente une variante élaborée du mode de réalisation de la figure 3. Elle assure une meilleure répartition de la matière entre les nœuds et les croisillons. Comme dans les deux cas précédents, l'empilement est effectué après rotation d'une grille 20 par rapport à la précédente. Après montage des plaques, les passages laissés au fluide sont des orifices circulaires.

Sur la figure 5, on a représenté une vue en coupe verticale d'un assemblage combustible 1' comportant un dispositif régulateur de débit du fluide de refroidissement, qui circule selon le sens des flèches f, réalisé selon l'invention. Comme il a été dit précédemment, ce dispositif est plus compact que ceux de l'art antérieur et il est possible d'obtenir une perte de charge identique avec une hauteur plus faible. Par suite, il est possible de réduire la hauteur du pied de l'assemblage, c'est-à-dire la hauteur nécessaire pour loger le dispositif régulateur de débit, les ouvertures oblongues 7 et le labyrinthe inférieur 11 destiné à limiter le débit de fuite du métal liquide. Le pied de l'assemblage est donc engagé partiellement dans la chandelle inférieure 9. Il est donc possible de réduire le diamètre de cette chandelle 9 en dessous du bouchon 8.

Les avantages qui découlent de cette réalisation sont d'une part une réduction des pertes de charges dues aux chandelles. La zone hachurée 13 représente la section de passage supplémentaire qui est obtenue par la réduction du diamètre de la chandelle 9. D'autre part, le diamètre des trous de fixation de ces chandelles dans la plaque inférieure 10a est plus faible. Cela permet de réduire l'épaisseur de cette plaque, ou, à épaisseur égale, d'augmenter sa résistance.

Il est bien entendu que l'invention ne se limite pas aux seuls exemples de réalisation qui sont décrits ci-dessus ; c'est ainsi qu'on pourra modifier la forme géométrique des orifices et des croisillons de la maille, ainsi que la forme géométrique du pourtour des grilles, en vue de les adapter au conduit dans lequel on veut régler le débit d'un fluide.

**Revendications**

1. Dispositif de réglage du débit d'un fluide comprenant une série de grilles disposées perpendiculairement à l'écoulement du fluide, formé d'un empilement de grilles (20) contiguës, dont chacune est constituée de mailles identiques formant un réseau plan, caractérisé en ce que les grilles sont identiques, lesdites mailles étant décalées d'une grille (20) à la grille (20) contiguë et en ce que la maille est formée par deux triangles équilatéraux adjacents, l'un correspondant à un orifice (28) et l'autre contenant un croisillon (29) à trois branches.

2. Dispositif selon la revendication 1, caractérisé en ce que les orifices (28) d'une grille (20) sont superposés aux croisillons (29) de la grille contiguë par rotation de 60 degrés.

3. Dispositif selon la revendication 1, caractérisé en ce que les orifices (28) d'une grille (20) sont superposés aux croisillons (29) de la grille (20) contiguë par retournement.

4. Dispositif selon l'une quelconque des revendications 1 à 3, caractérisé en ce que les grilles sont solidarisées par des tirants traversant ces grilles (20) en un certain nombre de points de contact (30) situés aux sommets des triangles équilatéraux des mailles.

5. Assemblage combustible de réacteur nucléaire caractérisé en ce qu'il comporte un dispositif de réglage du débit du fluide caloporteur réalisé selon l'une quelconque des revendications 1 à 3.

6. Assemblage combustible de réacteur nucléaire selon la revendication 5, dont le pied est disposé dans une chandelle creuse (9), caractérisé en ce que le pied dudit assemblage est engagé partiellement dans la chandelle (9), cette chandelle présentant une réduction de diamètre dans la partie où le pied de l'assemblage n'est pas engagé.

**Claims**

1. Apparatus for controlling fluid flow comprising a series of grilles perpendicularly disposed to the fluid flow, formed from a stack of adjacent grilles (20) of which each comprises identical intersecting members forming a flat grid, characterized in that the grilles are identical, said intersecting members being offset from one grille (20) to the adjacent grille (20) and in that the intersecting member is formed from two adjacent equilateral triangles, one corresponding to an orifice (28) and the other containing a three-armed cross (29).

2. Apparatus according to Claim 1, characterized in that the orifices (28) of one grille (20) are superimposable on the crosses (29) of the adjacent grille by rotation through 60°.

3. Apparatus according to Claim 1, characterized in that the orifices (28) of one grille (20) are superimposable on the crosses (29) of the adjacent grille (20) by turning through 180°.

4. Apparatus according to any one of Claims 1 to 3, characterized in that the grilles are held together by tie-rods transversing the grilles (20) at a certain number of contact points (30) situated at the apices of the equilateral triangles of the intersecting members.

5. Nuclear reactor fuel assembly, characterized in that it comprises an apparatus for controlling the flow of a heat transfer fluid formed according to any one of Claims 1 to 3.

6. Nuclear reactor fuel assembly according to Claim 5, whose base is located in a hollow pillar (9), characterized in that the base of said assembly is partially engaged in the pillar (9), said pillar having a reduced diameter in the part where the base of the assembly is not engaged.

**Ansprüche**

1. Vorrichtung zur Regelung der Durchflußmenge eines Fluids, die eine Reihe von senkrecht zur Fluidströmung angeordnete Gitter aufweist und von einem Stapel sich berührender Gitter (20) gebildet ist, von denen jedes identische Maschen aufweist, die ein ebenes Netz bilden, dadurch gekennzeichnet, daß die Gitter identisch sind, daß die Maschen von einem Gitter (20) gegenüber dem benachbarten Gitter (20) versetzt sind und daß die Masche von zwei benachbarten gleichseitigen Dreiecken gebildet ist, von denen eines einer Öffnung (28) entspricht und das andere einen dreiarmigen, sternförmigen Körper (29) enthält.

2. Vorrichtung nach Anspruch 1, dadurch gekennzeichnet, daß die Öffnungen (28) eines Gitters (20) den sternförmigen Körpern (29) des anliegenden Gitters durch Drehung um 60° überlagert sind.

3. Vorrichtung nach Anspruch 1, dadurch gekennzeichnet, daß die Öffnungen (28) eines Gitters (20) den sternförmigen Körpern (29) des anliegenden Gitters (20) durch Umdrehen überlagert sind.

4. Vorrichtung nach einem der Ansprüche 1 bis 3, dadurch gekennzeichnet, daß die Gitter durch Spannstangen miteinander befestigt sind, die die Gitter (20) an einer gewissen Anzahl von Berührungspunkten (30) durchqueren, die sich an den Spitzen der gleichschenkligen Dreiecke der Maschen befinden.

5. Kernreaktor-Brennelementbündel, dadurch gekennzeichnet, daß es eine Vorrichtung zur Regelung der Durchflußmenge eines Wärmeträgerfluids umfaßt, welche nach einem der Ansprüche 1 bis 3 ausgebildet ist.

6. Kernreaktor-Brennelementbündel nach Anspruch 5, dessen Fuß in einem hohlen Strebpfosten (9) angeordnet ist, dadurch gekennzeichnet, daß der Fuß des Bündels teilweise in den Streb pfosten (9) eingreift, welcher eine Durchmesserverringerung in dem Abschnitt aufweist, in den der Fuß des Bündels nicht eingreift.

FIG.5

FIG.1

FIG. 2

FIG. 3

2

FIG. 4